# EUROPEAN PATENT SPECIFICATION

(11) **EP 0 629 089 B1**
(45) Date of publication and mention of the grant of the patent: **15.03.2000**
(21) Application number: 94201562.9
(22) Date of filing: 01.06.1994
(51) Int. Cl.: H04N 7/24, H04N 5/92

(54) **Device for transmitting or storing digital television pictures, and device for receiving said pictures**
Vorrichtung zur Übertragung oder Aufzeichnung von digitalen Fernsehbildern, und Vorrichtung zum Empfang derselben
Dispositif pour la transmission ou l'enregistrement d'images de télévision numérique, et dispositif pour la récéption de ces images

(30) Priority: 07.06.1993 EP 93201613
(43) Date of publication of application: 14.12.1994
(73) Proprietor: Koninklijke Philips Electronics N.V., 5621 BA Eindhoven (NL)
(72) Inventor: De With, Peter Hendrik Nelis, NL-5656 AA Eindhoven (NL); Van Gestel, Wilhelmus Jacobus, NL-5656 AA Eindhoven (NL)
(74) Representative: Schmitz, Herman Jan Renier

(56) References cited:
- EP-A- 0 512 623
- EP-A- 0 540 350
- EP-A- 0 573 813
- WO-A-92/08289
- IEEE TRANSACTIONS ON CONSUMER ELECTRONICS, vol.CE-37, no.3, August 1991, NEW YORK US pages 275 - 282, XP000263196 YONEDA ET AL 'AN EXPERIMENTAL DIGITAL VCR WITH NEW DCT-BASED BIT-RATE REDUCTION SYSTEM'
- IEEE JOURNAL ON SELECTED AREAS IN COMMUNICATION, vol.7, no.5, June 1989, NEW YORK US pages 807 - 814, XP000036749 WADA 'Selective Recovery of Video Packet Loss Using Error Concealment'
- GLOBECOM '92, vol.3, December 1992, ORLANDO, FLA., US pages 1374 - 1380, XP000390434 RAYCHAUDHURI ET AL 'A FLEXIBLE AND ROBUST PACKET TRANSPORT PROTOCOL FOR DIGITAL HDTV'

## Description

The invention relates to a device for transmitting or storing digital television pictures and to a device for receiving digital television pictures. The invention also relates to a storage medium on which digital pictures are stored.

### DESCRIPTION OF THE PRIOR ART

For digital transmission and storage of television pictures, picture transform of two-dimensional blocks of, for example 8*8 pixels is generally used. By means of this transform, for example Discrete Cosine Transform (DCT), a block of coefficients is obtained whose number equals the number of pixels in each block. One of these coefficients, the DC coefficient, represents the average brightness or colour of the block. The other coefficients are AC coefficients. Each of them represents the extent to which a given picture detail is present.

The quantity of bits per picture is not reduced by the transform. Consequently, the digital picture signal is compressed before transmission or storage. This compression is obtained by quantizing the coefficients after scanning (serializing) in decreasing order of significance and subjecting them to variable-length coding. Quantization leads to many coefficients having the value of zero. In variable-length coding, series of these zero coefficients are coded effectively. Coding of a series of zero coefficients at the end of a block may even be dispensed with because the end of a block is marked by an End-Of-Block (EOB) code. In this way each block of pixels is converted into a block of code words. Such a block, which comprises a variable number of code words of variable length, will hereinafter be referred to as data block. The transmission of variable-length code words instead of pixels or coefficients appears to provide the possibility of a considerable bit rate reduction. This is offset by the fact that the transmission of the code words is sensitive to transmission errors. A transmission error generally results in loss of synchronization at the receiver end. Not only the relevant code word but also the subsequent code words are no longer recognized.

To make the compressed video signal less vulnerable to transmission errors, IEEE Transactions on Consumer Electronics, Vol.CE-37, No.3, August 1991, Yoneda et al. "An Experimental Digital VCR with New DCT-Based Bit-Rate Reduction System", and Globecom '92, Vol.3, December 1992, Raychaudhuri et al. "A Flexible and Robust Packet Transport Protocol for Digital HDTV" disclose arrangements which packetize the data stream in packets of fixed length. In such embodiments, the data stream maintains its original order and a packet may or may not comprise the most significant code words of a data block

A different approach to making the data stream less vulnerable loss of synchronization is disclosed in United States Patent US 4,907,101 which corresponds with the preamble of claim 1. This document describes a device which comprises formatting means for accommodating the code words of the data blocks in corresponding channel blocks of fixed length. Such channel blocks may also be retrieved in the case of transmission errors because they are transmitted at known instants, or are stored at fixed positions on a storage medium (tape, disc). Moreover, channel blocks can be protected adequately by means of sync words, identification words and protection bits.

The known device accommodates at least the most significant code words of a data block in a corresponding channel block of fixed length. As far as the space in the channel block is not adequate, the surplus of less significant data is accommodated in other channel blocks. If there is space left, the channel block will comprise the surplus data of other data blocks as well. The boundary between data of the corresponding data block and surplus data of other data blocks is constituted by the previously mentioned EOB code.

As described in said Patent Specification, the receiver comprises two decoders. A first decoder receives the channel blocks and is adapted to recognize the presence of the EOB code therein. By means of this decoder the received data stream is split up into data of corresponding data blocks and surplus data. A second decoder receives the data blocks and ensures their complete decoding. If the size of a channel block is exceeded during decoding of a data block, the data block will be completed with the split-off surplus data until the EOB code is recognized.

The known device has the drawback that said first decoder has a complicated structure and requires a large chip surface. In fact, detection of the EOB code requires recognition of at least the length of the preceding code words. The complexity of such an EOB detector is comparable with that of the second decoder, a full variable-length decoder. Consequently, the known device requires two complicated decoders.

A further drawback of the known device is the fact that a channel block accommodates only a single data block. The desired protection and identification of the channel blocks by means of sync words, identification words and protection bits thus requires a considerable overhead of bits.

### OBJECT AND SUMMARY OF THE INVENTION

It is an object of the invention to provide a device for transmitting or storing television pictures in such a way that the pictures are transmitted reliably and can be decoded by a relatively simple receiver.

To this end, the device is characterized in that the formatting means are adapted to accommodate a status code indicating the absence or presence of said surplus of code words in the channel block, the status code being accommodated at a predetermined position of each channel block. The formatting means are further adapted to accommodate a start address of said surplus of code words in channel blocks being filled up with said surplus of code words, said start address being accommodated at a predetermined position of the channel block which in channel blocks not having a surplus of code words is used to accommodate code words.

The boundary between data of corresponding data blocks and surplus data of other data blocks is now obtained at the receiver end by a simple downcount of bits. Length decoding of variable-length code words and EOB detection can be dispensed with. Since the start address is accommodated at a predetermined position of the channel block, the reliability of the split-up is not affected by a bit error in a variable-length code word. The transmission of the status code requires extra space (in principle, one bit per channel block), but practical experiments have proved that this is amply offset by the frequently occurring redundance of the (multibit) start address. If a channel block does not comprise any surplus data, the space which would be occupied by the start address is utilized for the transmission of code words.

It should be noted that accommodating a status bit to indicate whether or not the channel block includes surplus data is known per se from WO 92/08289. Also an address pointer is disclosed in this document. However, the address pointer is accommodated in each channel block, irrespective of whether the channel block includes surplus data or not. Moreover, the pointer does not denote the start position of surplus data in the channel block. The decoder must still detect the EOB in order to determine the boundary between corresponding data and surplus data. Instead, the address pointer identifies the memory address in which the channel block data must be stored.

The start address is preferably expressed in an integral number of fixed word lengths of, for example eight bits. Then, the start address does not only occupy fewer bits, but it also simplifies the required circuitry for splitting up the data stream into corresponding data and surplus data. A possible space between data of the corresponding data block and surplus data is filled up with a dummy bit series. The start of a variable-length code word which is longer than said space may be used for this purpose, no separate definition of the dummy bit series will then be required.

A further embodiment of the device is characterized in that the formatting means are further adapted to accommodate selected code words of at least two data blocks in corresponding successive parts of a channel block. On the one hand, this leads to a reduction of overhead information (sync words, identification words, protection bits) because now a channel block is formed per group of at least two data blocks. It is also ensured that each channel block comprises at least selected code words of the corresponding data blocks, for example the code words of each data block which are representative of the DC coefficient and the most significant AC coefficients. If a group of data blocks does not completely fit in the channel block and consequently a part of the code words is accommodated in the form of surplus data in another channel block, this surplus data will always relate to the less significant AC coefficients. The selected code words of each data block can be regained by means of a simple downcount of bits without variable-length decoding and hence in a reliable way. Even in the case of trick modi of a video recorder, in which the head scans only a part of the tracks, a given minimum picture quality of a group of blocks can be reconstructed for each channel block which has been read.

It is to be noted that the accommodation of selected code words of data blocks in block sections has also been proposed in the non-prepublished European Patent Application EP-A 0 578 308. In the device described in this Application each channel block comprises surplus data, even if the group of data blocks were to fit completely in a channel block. The start address of the surplus data is not transmitted separately but is formed by the end of the last block section in a channel block.

The formatting means are preferably adapted to accommodate a length code at predetermined positions of the channel block for each channel block section, which length code is indicative of the length of this block section. This provides the possibility of determining, for each karate data block, the number of selected code words which is required for a minimum picture quality. The length of the block sections of a channel block is then adapted thereto. It is feasible to transmit the exact length of each block section. In devices in which data blocks are classified as to picture energy content, the length code is, however, preferably constituted by the class of the data block. Since the class is transmitted anyway, the transmission of the length code does not require any extra transmission or storage space. The length code preferably represents a integral number of fixed word lengths of, for example, eight bits. A possible space in the last block section of the channel block can be filled up with a dummy bit series, preferably the start of a variable-length code word which is longer than the space to be filled up.

### BRIEF DESCRIPTION OF THE FIGURES

Fig. 1 shows diagrammatically a video recorder provided with a device for storing and a device for receiving television pictures according to the invention.
Figs. 2 and 3 show some diagrams to explain the operation of a coding station shown in Fig. 1.
Fig. 4 shows an embodiment of a formatting circuit shown in Fig. 1.
Figs. 5, 6 and 7 show some diagrams to explain the operation of the formatting circuit shown in Fig. 4.
Fig. 8 shows an embodiment of a deformatting circuit shown in Fig. 1.
Figs. 9 and 10 show some diagrams to explain the operation of the deformatting circuit shown in Fig. 8.

### DESCRIPTION OF EMBODIMENTS

### General structure

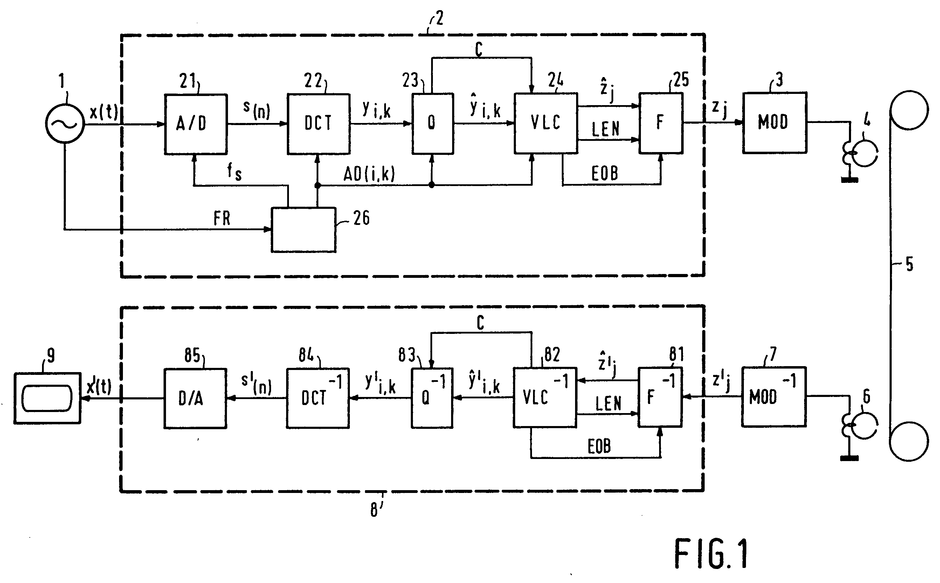

The invention will be described in greater detail with reference to a video recorder shown diagrammatically in Fig. 1. In this Figure the device for transmitting or storing television signals is constituted by a coding station 2 and the device for receiving television signals is constituted by a decoding station 8. The coding station receives an analog picture signal x(t) from a picture signal source 1 and supplies a serial channel bit steam zⱼ which is applied *via* a modulation circuit 3 to a write head 4, by means of which this channel bit stream is recorded on a magnetic tape 5. To regain the original picture signal, a read head 6 is present which converts the information on the magnetic tape into an electric signal which, after demodulation in a demodulation circuit 7, yields a channel bit stream z'ⱼ which is applied to the input of the decoding station 8. The output of the decoding station supplies an analog picture signal x'(t) which is applied to a monitor 9.

### The coding station

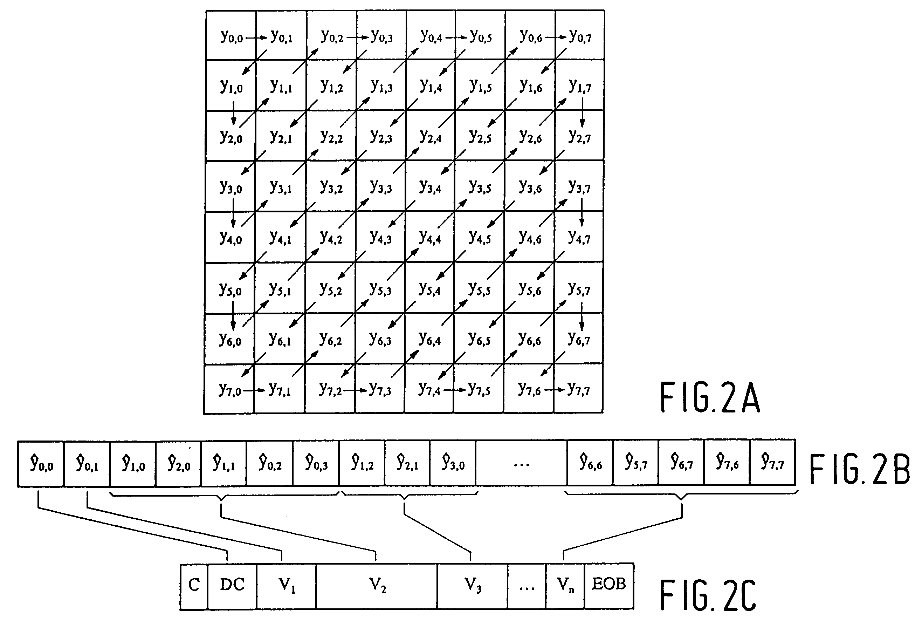

In the coding station 2 the analog picture signal x(t) is sampled at a suitable sampling frequency fₛ in an A/D converter 21. This sampling frequency is, for example 13.5 MHz for the luminace signal Y and 6.75 MHz for the colour difference signals U and V. The sampling operation yields a 8-bit picture signal sample s(n) for each pixel. These picture signal samples are subsequently applied to a forward two-dimensional Discrete Cosine Transformer (DCT) 22. Numerous examples of such a transformer are described in literature, for example in European Patent Application EP 0 286 184 so that in this respect it is sufficient to remark that the transformer supplies the coefficient block shown in Fig. 2A for each sub-picture of 8*8 pixels. The coefficients of such a block are denoted by y_{i,k} in which i,k = 0, 1, 2, ... 7. The coefficient y_{0,0} represents the DC coefficient and is a measure of the average luminance Y or chrominance U, V of the sub-picture. The other coefficients y_{i,k} with i,k ≠ 0 are the AC coefficients. The coefficients are read consecutively, with the DC coefficient y_{0,0} in the lead. The sequence is shown by means of arrows in Fig. 2A and is determined by a control circuit 26 which generates address words AD(i,k) for this purpose and applies them to the transformer 22.

The series of coefficients thus obtained is applied to a quantizing circuit 23. This circuit subjects the coefficients y_{i,k} to a quantizing operation so that a quantized coefficient ŷ_{i,k} is obtained for each coefficient y_{i,k}. Generally, the quantization is dependent on the position of the coefficient in the coefficient block. To this end the quantizing circuit 23 not only receives the coefficients but also the associated address words AD(i,k). Since many AC coefficients have a small value, many quantized coefficients ŷ_{i,k} will have the value of zero. In this connection it is common practice to refer to these coefficients as zero coefficients and non-zero coefficients. The series of quantized coefficients ŷ_{i,k} is shown in Fig. 2B.

A more and more frequent aim is to render the quantization also dependent on the extent to which the sub-picture comprises picture details. The quantity of picture detail is determined by the value of the AC coefficients and the spatial frequencies which they represent. An example of a quantizing circuit 23 in which the quantization is dependent on the extent of picture detail is described in United States Patent US 4,398,217. Here, the AC coefficients of a coefficient block are compared with the corresponding coefficients of a number of predetermined reference blocks each representing a picture detail class. The maximally corresponding reference block determines which picture detail class is allocated to the coefficient block. The AC coefficients of the block are now quantized also in dependence upon the class thus determined. The picture detail class is transmitted in the form of a classification code C to the decoding station. As there is more picture detail in the corresponding sub-picture of 8*8 pixels, C has a larger value. C will hereinafter be assumed to be a 2-bit number in which C = 0 corresponds to the least picture detail and C = 3 corresponds to the most picture detail.

The quantized coefficients ŷ_{i,k} are subsequently applied to a variable-length coding (VLC) circuit 24 which subjects each coefficient block of 64 quantized coefficients ŷ_{i,k} to variable-length coding and converts them into a series of code words of variable length. Moreover, the VLC coding circuit supplies the length LEN for each code word. A possible embodiment of the VLC coding circuit 24 is described in European Patent Application EP 0 260 748. In this embodiment an unambiguous code word is generated for each non-zero coefficient, together with the directly succeeding or preceding zero coefficients. The VLC coding circuit also receives the classification code C from the quantizing circuit 23, in order that this code is also transmitted as a code word to the decoding station. To distinguish one coefficient block from the other, each coefficient block is terminated by means of an End-Of-Block (EOB) code. This EOB code is supplied as soon as the VLC coding circuit of the control circuit 26 has received the last address word AD(7,7). It is to be noted that it is advantageous not to subject the DC coefficient to a variable-length coding but to a fixed length coding. The classification code C also has a fixed length.

The code words of a coefficient block constitute a data block. In this embodiment it is assumed that the VLC coding circuit 24 supplies the code words bit-serially so that a bit stream ẑⱼ is obtained. The bit stream corresponding to a data block is shown in Fig. 2C. As is apparent from this Figure, the data block successively comprises: the classification code C having a fixed length of, for example 2 bits, the DC coefficient having a fixed length of, for example 9 bits, a variable number of variable-length code words V₁, V₂, ... Vₙ and the EOB code having a fixed length of, for example 5 bits.

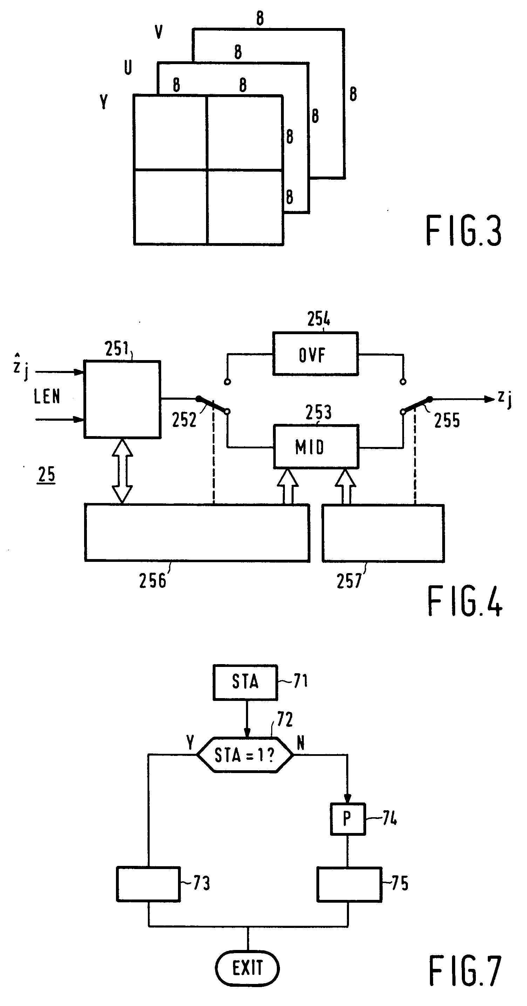

The afore-mentioned operations are used for the luminance signal Y as well as for the chrominance signals U and V. If the sample frequency of the chrominance signal in the horizontal and vertical directions amounts to half the sample frequency of the luminance signal, one chrominance block U and one chrominance block V is obtained for every four luminance blocks Y. In this respect it is common practice to speak of a macro block. Such a macro block is shown symbolically in Fig. 3.

The code words of a group of data blocks and their respective length LEN are subsequently applied to a formatting circuit 25 which forms the channel bit stream zⱼ. The formatting circuit will hereinafter be described in greater detail.

### The formatting circuit

Fig. 4 shows diagrammatically an embodiment of the formatting circuit 25. The circuit comprises successively a buffer memory 251, a distributor switch 252, a first memory 253, a second memory 254 and a multiplex switch 255. The first memory 253 will hereinafter be referred to as MID memory (most important data). The second memory 254 will hereinafter be referred to as OVF memory (overflow). A first control circuit 256 is coupled to the buffer 251, controls the distributor switch 252 and supplies a write address for the MID memory. A second control circuit 257 controls the multiplex switch 255 and supplies a read address for the MID memory.

The first control circuit 256 is adapted to distribute the code words of the group of data blocks stored in the buffer 251 among the memories 253 and 254. It will hereinafter be assumed that a group of twelve data blocks is processed each time. These twelve data blocks are referred to as DB₁ ... DB₁₂ and correspond to a double macro block comprising two contiguous macro blocks (see Fig. 3).

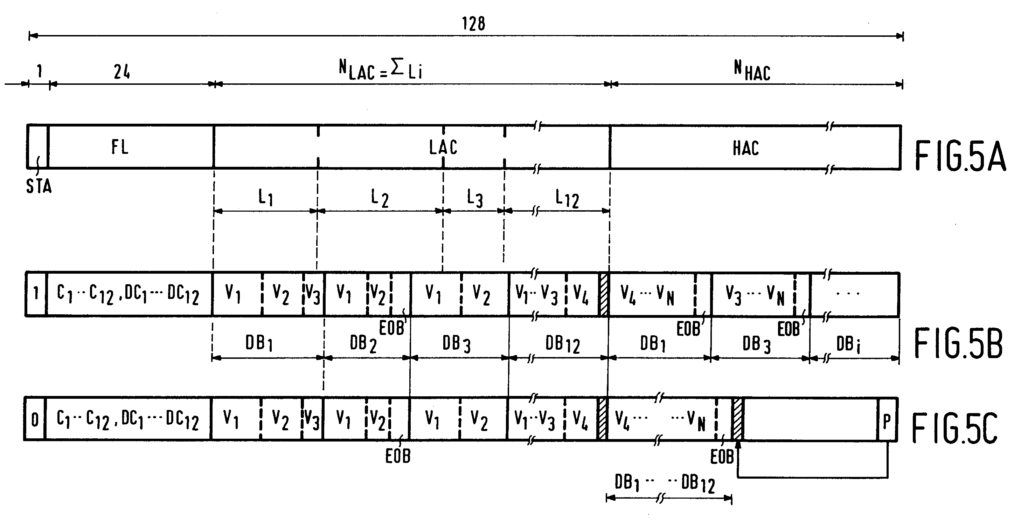

The MID memory has a layout as shown in Fig. 5A. It is 128 bytes long and comprises a first byte STA for storing status information, a section FL having a length of 24 bytes for storing fixed-length code words, a section LAC for storing variable-length code words which represent low-frequency AC coefficients and a remaining section HAC for storing other variable-length code words. The size of the LAC section is determined by the control circuit 256 for each double macro block. More particularly, the LAC section for each data block DBᵢ comprises a memory section having a length Lᵢ which is dependent on the classification code C of a data block DBᵢ. As already previously stated, C may assume the values 0 ... 3, dependent on the extent of picture detail in the corresponding sub-picture. In the control circuit a length L is fixed for each value of C. In this example the length for C = 0 is two bytes, for C = 1 three bytes, for C = 2 four bytes and for C = 3 six bytes.

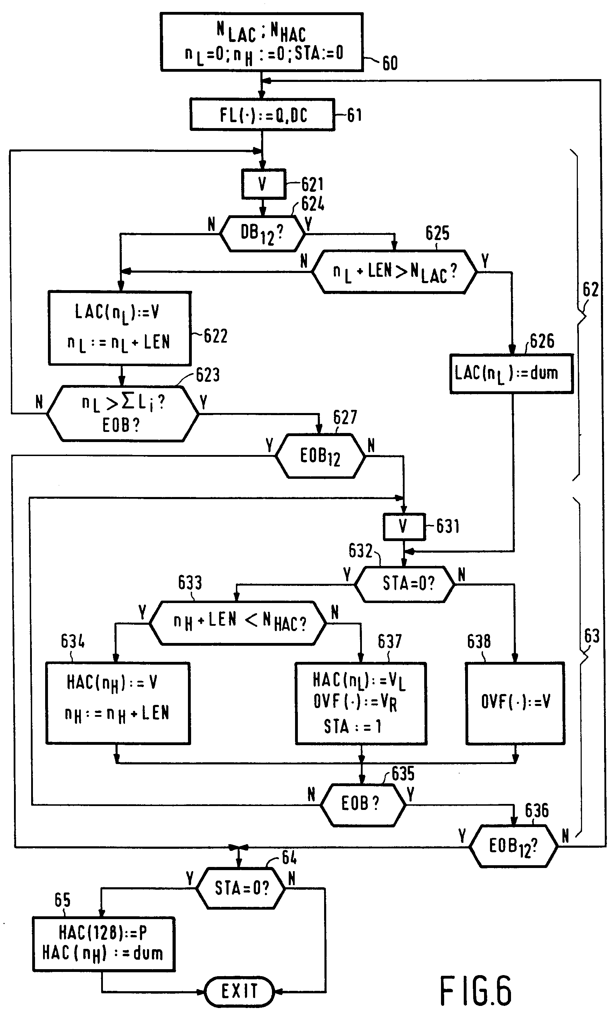

The operation of the control circuit 256 will now be explained with reference to a flow chart shown in Fig. 6. In a step 60 the operation of processing a double macro block is initialized. In this initialization step the control circuit reads the classification code C of the twelve data blocks from memory buffer 251 and sums the corresponding lengths Lᵢ. The sum thus obtained constitutes the length N_{LAC} of the LAC section of the MID memory. Moreover, the control circuit fixes the remaining length N_{HAC} of the HAC section. Subsequently, the circuit initializes two memory addresses n_{L} and n_{H} which represent a bit position within the LAC and HAC sections, respectively, of the MID memory. Both addresses have the initial value 0. Moreover, the logic value 0 is assigned to one of the bits in the status byte STA (see Fig. 5A). The significance of this status bit will be described in greater detail.

After this initialization the successive code words (sec Fig. 2C) of a data block DBᵢ are transferred from buffer memory 251 to one of the memories MID or OVF. In a step 61 the control circuit stores the first two code words (the fixed length classification code C and DC coefficient) at fixed, predetermined positions of the FL section of the MID memory. In a process 62 a number of variable-length code words of data block DBᵢ is subsequently stored in the LAC section of the MID memory. This is realised as follows. A code word V is read (step 621) and in a step 622 it is stored in the LAC section from bit position n_{L}. Subsequently, the bit position n_{L} is raised by the length LEN of the stored code word. In a step 623 it is subsequently ascertained whether the stored code word is an EOB code or whether the end of the memory section has been exceeded due to storage of the code word. The end of the memory section is then determined by the sum of the lengths Lᵢ which correspond to the classification codes C of the data blocks DB₁ ... DBᵢ processed so far. If the end of the memory section has not been exceeded and if the stored code word is not an EOB code, the circuit returns to the step 621 so as to store the next code word in the memory section. In this way, each memory section of the LAC section with length Lᵢ is filled as much as possible with variable-length code words V1, V2 *etc.* (see Fig. 2C) of a corresponding data block DBᵢ. These code words are representative of the most significant AC coefficients of this block.

As is apparent from the foregoing, the code word stored last in a memory section may exceed the end of this memory section (expressed in a integral number of bytes). There is one exception. A code word of the last data block DB₁₂ must not exceed the length of the LAC section. This is achieved by ascertaining for each code word of the last data block DB₁₂ (step 624) whether this code word can still be fully stored in the LAC section (step 625). If the code word no longer fits, the LAC section is completed with dummy bits in a step 626.

After the most important variable-length code words of a data block DBᵢ have been stored in a corresponding memory section of the LAC section, the other code words of this data block are stored. This operation takes place in a process 63. In a step 631 of this process the subsequent code word V of data block DBᵢ is read. In a step 632 it is ascertained whether the status bit STA has the logic value 0. By means of this value the status bit indicates that the code word is stored in the HAC section of the MID memory. The distributor switch 252 is then in the position as shown in Fig. 4. As yet, the status bit will have the value 0. In a step 633 it is subsequently ascertained whether the code word V fits in the HAC section of the MID memory. If this is the case, the code word is stored in this section from bit position n_{H} in a step 634. Subsequently, the bit position n_{H} is raised by the length LEN of the stored code word. In a step 635 it is ascertained whether the stored code word is an EOB code. If this is not the case, the subsequent code word is read (step 631). If this is the case and if not all data blocks have been processed (step 636), the control circuit returns to the step 61 so as to process the subsequent data block.

In this way all other code words of the data block are successively stored in the HAC section of the MID memory until it appears in the step 633 that the relevant code word no longer completely fits in the HAC section. In that case a step 637 is performed. In this step the code word is stored in the HAC section in so far as it fits in this section. This still fitting part is denoted by V_{L} in Fig. 6. The control circuit subsequently puts the distributor switch 252 (see Fig. 4) in the other position. Consequently, the other bits of the code word (V_{R}) are stored in the OVF memory. Moreover, the logic value 1 is allocated to the status bit STA. The result is that all subsequent code words of the data block are stored in the OVF memory in a step 638. This OVF memory thus constitutes a buffer for data which no longer fits in the MID memory. This data is referred to as surplus data.

Steps 627 and 636 in Fig. 6 will now be described. In these steps it is ascertained whether the EOB code of the last data block DB₁₂ has been processed. In that case the distribution of code words among the two memories MID and OVF is terminated. The control circuit now checks in a step 64 whether the status bit STA has maintained the logic value 0. The twelve data blocks are then completely stored in the MID memory and storage of surplus data in the OVF memory has not taken place. In that case the start address of the still remaining space in the MID memory is computed on the basis of bit position n_{H} in a step 65. This start address, rounded off upwards to an integral number of bytes, is stored in the last memory location of the MID memory in the form of a pointer P. The remaining space between the last code word and the rounded-off start address is filled with dummy bits.

Fig. 5B shows a first example of the distribution of code words of a double macro block in the MID memory. The classification codes C and the DC coefficients of the twelve data blocks are at fixed positions of the FL section. The first memory section of the LAC section (with length L₁) accommodates the variable-length code words V1, V2 and V3 of DB₁, in which V3 has exceeded the length L₁. The second memory section appears to have accommodated all code words of DB₂, including its EOB code. Consequently, the first code word V1 of the third data block DB₃ can already start in the second memory section. V1 ... V4 of the last data block DB₁₂ are stored in the LAC section. The code word V5 would have caused exceeding of this section. It has been attempted to indicate by way of a shaded area that the LAC section is completed with dummy bits. For the sake of completeness it is to be noted once more that the length L₁ of each memory section is directly coupled to the value of the corresponding classification code C in the FL section. The HAC section is filled with the other code words, staring at V4 ... VN and EOB of DB₁. The twelve data blocks appear to have such a total length that not all code words fit in the MID memory. This is indicated by the status bit STA which has the logic value 1. The surplus data is stored in the OVF memory, contiguous to surplus data of previous double macro blocks.

Fig. 5C shows a second example of the distribution of code words of a double macro block in the MID memory. In this example all code words of the twelve data blocks appear to have been accommodated in the memory. The status bit therefore has the value 0 and a pointer P points at the start address of the still empty space in the HAC section of the memory. It has been attempted to indicate by way of a shaded area that the space between the last code word and the byte limit determined by P is filled with dummy bits.

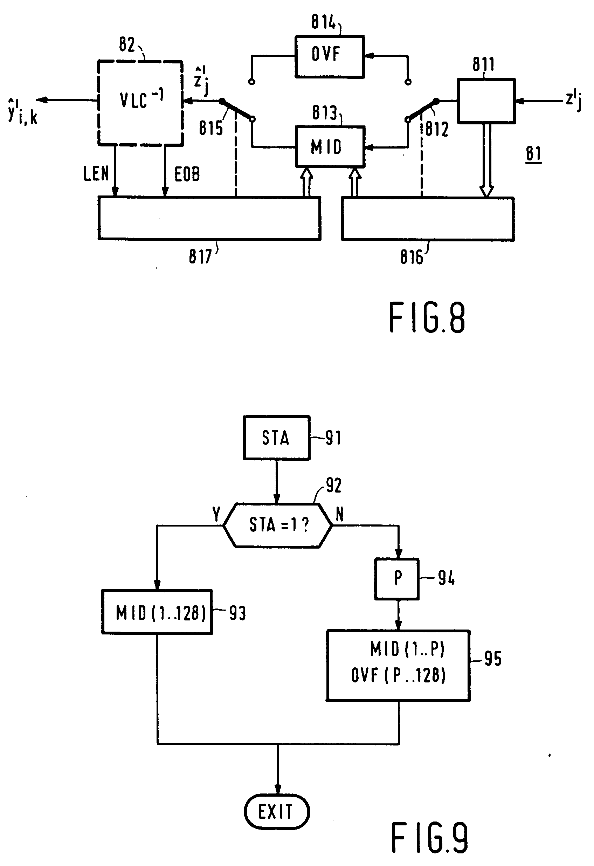

Reverting to Fig. 4, it appears that the data stored in the memories MID and OVF are combined by the multiplex switch 255 under the control of the second control circuit 257 to a channel bit stream zⱼ to be transmitted. The operation of this second control circuit will now be explained with reference to a flow chart which is shown in Fig. 7.

In a step 71 the control circuit reads the status bit STA into the MID memory. In a step 72 it is ascertained whether the status bit has the logic value 1. If this is the case, the MID memory is completely filled with data of the double macro block. In a step 73 all 128 bytes of MID memory are applied to the output *via* the multiplex switch. If the status bit has the logic value 0, the circuit writes the value P into the MID memory in a step 74. Subsequently the circuit successively applies to the output in a step 75: the first P bytes from the MID memory, 127-P bytes from the OVF memory and one byte of the value of P itself.

In this way a channel block of 128 bytes is transmitted for each double macro block. The division of such a channel block is apparent from Figs. 5B and 5C and thus need not be explained separately. It is only to be noted that the "empty" space shown in Fig. 5C is filled upon transmission with surplus data which will generally originate from other double macro blocks. It should be emphasized that each channel block in any case comprises the code words which are representative of a given extent of picture detail of the two corresponding macro blocks. As is apparent from Figs. 5B and 5C, the pointer P only occupies transmission space if this is really necessary. In the absence of surplus data in the channel block, the relevant byte is available for transmission of code words.

### The decoding station

In the decoding station 8 (see Fig. 1) the received channel bit stream z'ⱼ successively traverses a deformatting circuit 81, a variable-length decoding circuit 82, an inverse quantizing circuit 83, an inverse DCT circuit 84 and a D/A converter 85. The deformatting circuit 81 will be described in greater detail. The other circuits are generally known and will not be further described.

### The deformatting circuit

The deformatting circuit 81 which is shown diagrammatically in Fig. 8 has the same structure as the formatting circuit 25 (see Fig. 4). The circuit comprises a channel block buffer 811, a distributor switch 812, a first memory 813, a second memory 814 and a multiplex switch 815. The two memories 813 and 814 will hereinafter be referred to again as MID memory and OVF memory, respectively. A first control circuit 816 is coupled to channel block buffer 811, controls the distributor switch 812 and supplies a write address for the MID memory. A second control circuit 817 supplies a read address for the MID memory and controls the multiplex switch 815. It is also coupled to the variable-length decoder 82 (see also Fig. 1).

The first control circuit 816 is adapted to distribute the data in each channel block among the memories MID and OVF. This distributing operation will be explained with reference to a flow chart shown in Fig. 9. In a step 91 the status bit STA is read and in a step 92 it is ascertained whether the status bit has the logic value 1. If this is the case, the complete channel block is stored in the MID memory *via* the distributor switch in a step 93. If the status bit has the logic value 0, the circuit reads the value P in a step 94. Subsequently, the circuit writes P bytes into the MID memory and writes the other data into the OVF memory. After this distributing operation the MID memory comprises code words of a corresponding double macro block. The way in which these code words are stored is in full conformity with Fig. 5B or 5C. The MID memory thus has an FL section of 24 bytes, a LAC section comprising twelve memory sections of length L₁ and a remaining HAC section. The data in OVF memory is surplus data of other macro blocks.

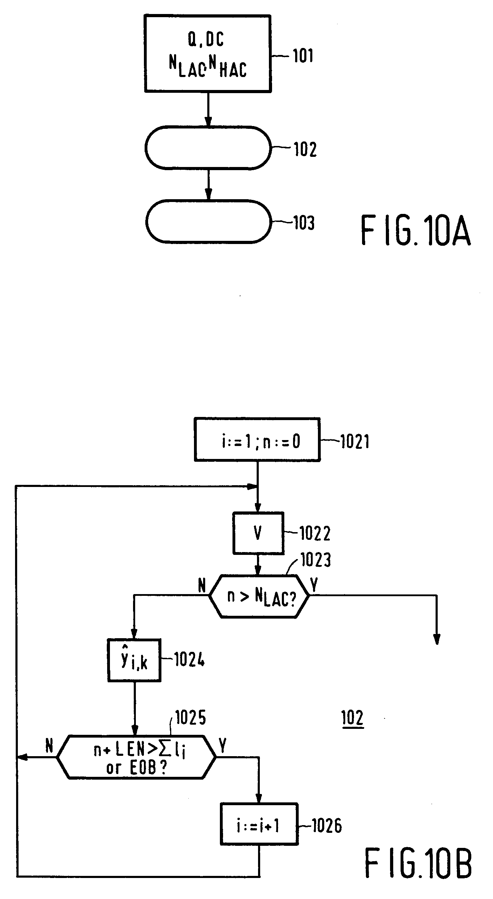

After a channel block has been split in this way, a recombination of the code words of a double macro block and its variable-length decoding follow. This is effected under the control of the second control circuit 817 whose operation will be explained with reference to a flow chart shown in Fig. 10A. Successive code words are first read from the MID memory *via* the multiplex switch 815 (see Fig. 8) and applied to the variable-length decoding circuit 82. As is apparent from Figs. 5B and 5C, the classification code C and the DC coefficient of the twelve data blocks are initially concerned. In a step 101 they are stored in a corresponding coefficient block by the variable-length decoding circuit. During reading of the classification code C the control circuit also determines the length L₁ of each LAC memory section, the total length N_{LAC} of the LAC section and the remaining length N_{HAC} of the HAC section.

Subsequently the successive code words V are read from the LAC section in a process 102. This process is further shown in Fig. 10B. In a step 1021 a data block counter i and a bit position counter n are initialized. Subsequently, each code word is read and applied to the variable-length decoder (step 1022). In a step 1023 it is ascertained whether the end of the LAC section is reached. As yet, this is not the case. The code word V which has been read represents one or more AC coefficients. In a step 1024 these coefficients ŷ_{i,k} are decoded by the variable-length decoder and stored in a corresponding coefficient block. Subsequently the circuit ascertains in a step 1025 whether the limit ΣLᵢ of the current LAC memory section has been exceeded or whether the decoded code word was an EOB code. If this is the case, the data block counter i is raised by 1 (step 1026) so as to indicate that the subsequent code words originate from a subsequent data block DBᵢ. Subsequently, the next code word is read. The process 102 is left as soon as it has been determined in step 1023 that all code words are written into the LAC section. This is the case when the bit position counter n exceeds the length N_{LAC} during reading of a code word before the code word is decoded by the variable-length decoder.

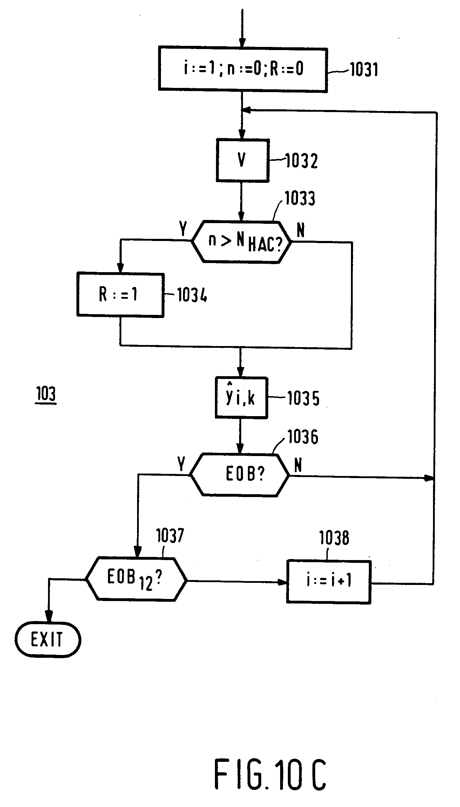

The circuit now continues with a process 103 (see Fig. 10A) in which the other code words are read from the HAC section. This process is further shown in Fig. 10C. In a step 1031 the data block counter i and the bit position counter n are reinitialized. The bit position counter now points at the position in the HAC section of the MID memory. Moreover, in this step the logic value 0 is assigned to a routing bit R. This routing bit controls the position of multiplex switch 815 (see Fig. 8). The MID memory is selected for R = 0 and the OVF memory is selected for R = 1. In a step 1032 a code word is read from the selected memory. As yet, this will be the MID memory. In a step 1033 it is ascertained whether the limit of the HAC section is reached. If this is not the case, the HAC section supplies a complete code word V. If this is the case, it is a code word which is no longer completely accommodated in the MID memory. In a step 1034 the routing bit then obtains the value 1 so that the multiplex switch is put into its other position. The rest of the code word as well as any subsequent code word is then read from the OVF memory. The code word V which has thus been read is decoded in a step 1035 by the variable-length decoder and stored as coefficient ŷ_{i,k} in the corresponding coefficient block. In a step 1036 it is ascertained whether the decoded code word is an EOB code. If this is not the case, the subsequent code word is read. If this is the case, the data block counter i is first raised by 1 (step 1038). In this way all code words of a double macro block are decoded until the last EOB code (step 1037) is found.

### Further remarks

To avoid overflow of the OVF memory, the length of the channel blocks and the number of channel blocks per television picture will have to be in conformity with the quantity of data. However, it is not necessary for the length of a channel block to correspond to the average length of a double macro block. If for certain reasons a smaller length of channel blocks is desired, the transmission of a plurality of channel blocks with corresponding data can be alternated with channel blocks with surplus data only. In that case the status byte of each channel block also comprises a indication indicating the channel block type.

It may further be noted that the channel blocks need not necessarily start at equidistant bit positions. For the sake of robustness of the channel bit stream it is sufficient when the bit positions at which each channel block starts have been predetermined and are known at the receiver end. In practice, different formats for recorders for consumer and professional use can be standardized. The same applies to the transmission and recording of standard TV signals and HDTV signals.

## Claims

1. A device (2) for transmitting or storing digital television pictures, comprising means for dividing each television picture into blocks of pixels, coding means (22-24) for coding each block of pixels in a data block (DB) of variable length code words (V₁-Vₙ) in a decreasing order of significance, and formatting means (25) for:
- accommodating at least the most significant code words (V₁-V₃) of one or more data blocks (DB₁-DB₁₂) in a corresponding channel block of fixed length;
- if the channel block provides insufficient space for all the code words (V₁-V_{N}) of the data block(s), accommodating the surplus of code words in other channel blocks; and
- if the channel block has space left after all the code words (V₁-V_{N}) of the data block(s), filling up said space with the surplus of code words of other data blocks;
characterized in that the formatting means (25) are further adapted to:
- accommodate a status code (STA) indicating the absence or presence of said surplus of code words in the channel block, said status code being accommodated at a predetermined position of each channel block; and
- accommodate a start address (P) of said surplus of code words in channel blocks being filled up with said surplus of code words, said start address being accommodated at a predetermined position of the channel block which in channel blocks not having a surplus of code words is used to accommodate code words.

2. A device as claimed in Claim 1, wherein the start address (P) is expressed in an integral number of fixed word lengths.

3. A device as claimed in Claim 2, which is further adapted to fill up the space between code words of said data block and surplus code words of other data blocks with the start of a variable-length code word which is longer than said space.

4. A device as claimed in any one of the preceding Claims, characterized in that the formatting means are further adapted to accommodate the most significant code words of at least two data blocks in corresponding successive sections of a channel block while a length code which is indicative of the length of a channel block section is accommodated at predetermined positions of the channel block for each channel block section.

5. A device as claimed in Claim 4, wherein the coding means are adapted to classify data blocks as to picture energy content, the length code being constituted by a classification code (C) representing said classification.

6. A device as claimed in Claim 5, wherein the length code represents an integral number of fixed word lengths.

7. A device for receiving digital television pictures in the form of a series of channel blocks of fixed length, comprising:
- deformatting means for splitting channel blocks into code words of one or more corresponding data block and surplus data of other data blocks and for adding surplus data to the code words of the respective data block;
- decoding means for decoding the data blocks in television pictures;
characterized in that the deformatting means are adapted to perform said split-up of a channel block in response to a status code (STA) indicating the absence or presence of said surplus of code words in the channel block, said status code being accommodated at a predetermined position of each channel block, and in response to a start address (P) of said surplus of code words in channel blocks being filled up with said surplus of code words, said start address being accommodated at a predetermined position of the channel block which in channel blocks not having a surplus of code words is used to accommodate code words.

8. A device as claimed in Claim 7, characterized in that it is adapted to allocate code words accommodated in predetermined successive parts of a channel block to corresponding data blocks, the length of each block section being fixed in response to a length code accommodated in the channel block for said purpose.

9. A video recorder comprising a device as claimed in any one of Claims 1-6, and a device as claimed in Claim 7 or 8.

10. A digital video signal representing digital television pictures which have been coded in data blocks of variable length code words having a decreasing order of significance, at least the most significant code words of one or more data blocks being accommodated in a corresponding channel block of fixed length, a surplus of code words of the data block(s) not fitting in the channel block being accommodated in other channel blocks, and a shortage of data in a channel block being filled up with the surplus of code words of other data blocks, characterized in that the signal inludes:
- a status code (STA) indicating the absence or presence of said surplus of code words in the channel block, said status code being accommodated at a predetermined position of each channel block; and
- a start address (P) of said surplus of code words in channel blocks being filled up with said surplus of code words, said start address being accommodated at a predetermined position of the channel block which in channel blocks not having a surplus of code words is used to accommodate code words.

11. A video signal as claimed in Claim 10, wherein the address is expressed in an integral number of fixed word lengths.

12. A video signal as claimed in Claim 11, wherein the space between data of the corresponding data block(s) and surplus data is filled up with the start of a variable-length code word which is longer than said space.

13. A video signal as claimed in any one of Claims 10-12, characterized in that selected code words of at least two data blocks are accommodated in corresponding successive sections of a channel block, while a length code which is indicative of the length of a channel block section is accommodated at predetermined positions of the channel block for each channel block section.

## Patentansprüche

1. Anordnung (2) zum Übertragen oder Speichern von Fernsehbildern mit Mitteln zum Aufteilen jedes Fernshbildes in Blöcke mit Pixeln, mit Codierungsmitteln (22-24) zum Codieren jedes Blocks mit Pixeln zu einem Datenblock (DB) mit veränderliche-Längencodewörtern (V₁ - Vₙ) in abnehmender Reihenfolge der Signifikanz, und mit Formatierungsmitteln (25) zum:
- Unterbringen wenigstens der signifikantesten Codewörter (V₁ - V₃) von einem oder mehreren Datenblöcken (DB₁ - DB₁₂) in einem entsprechenden Kanalblock fester Länge;
- wenn der Kanalblock ungenügend Raum für alle Codewörter (V₁ - V_{N}) der Datenblöcke bietet, Unterbringen der restlichen Codewörter in anderen Kanalblöcken; und
- wenn der Kanalblock nach allen Codewörtern (V₁ - V_{N}) der datenblöcke noch Raum übrig hat, Füllen des genannten Raums mit den restlichen Codewörtern anderer Datenblöcke;
dadurch gekennzeichnet, dass die Formatierungsmittel (25) weiterhin angepasst sind zum:
- Unterbringen eines Statuscodes (STA), der das Fehlen oder das Vorhandensein der genannten restlichen Codewörter in dem Kanalblock angibt, wobei der genannte Statuscode an einer vorbestimmten Stelle jedes Kanalblocks untergebracht wird, und
- Unterbringen einer Startadresse (P) der genannten restlichen Codewörter in Kanalblöcken, die mit den genannten restlichen Codewörtern gefüllt werden, wobei die genannte Startadresse an einer vorbestimmten Stelle des Kanalblocks untergebracht wird, die bei Kanalblöcken ohne restliche Codewörter zum Unterbringen von Codewörtern benutzt wird.

2. Anordnung nach Anspruch 1, wobei die Startadresse (P) in einer ganzen Anzahl fester Wortlängen ausgedrückt wird.

3. Anordnung nach Anspruch 2, die weiterhin dazu eingerichtet ist, den Raum zwischen Codewörtern des genannten Datenblocks und Codewörtern anderer Datenblöcke mit dem Start eines veränderliche-Längencodewortes zu füllen, das nicht länger ist als der genannte Raum.

4. Anordnung nach einem der vorstehenden Ansprüche, dadurch gekennzeichnet, dass die Formatierungsmittel weiterhin dazu eingerichtet sind, die signifikantesten Codewörter wenigstens zweier Datenblöcke in aufeinanderfolgenden Teilen eines Kanalblocks unterzubringen, während ein Längencode, der indikativ ist für die Länge eines Kanalblockteils an vorbestimmten Stellen des Kanalblocks für jeden Kanalblockteil untergebracht wird.

5. Anordnung nach Anspruch 4, wobei die Codierungsmittel dazu eingerichtet sind, Datenblöcke auf ihren Bildenergieinhalt zu Klassifizieren, wobei der Längencode durch einen Klassifizierungscode (C) gebildet wird, der die genannte Klassifizierung darstellt.

6. Anordnung nach Anspruch 5, wobei der Längencode eine ganze Anzahl fester Wortlängen darstellt.

7. Anordnung zum Empfangen digitaler Fernsehbilder in Form einer Reihe von Kanalblöcken fester Länge, mit:
- Deformatierungsmitteln zum Aufteilen von Kanalblöcken in Codewörter eines oder mehrerer entsprechenden Datenblöcke und restliche Daten anderer Datenblöcke und zum Addieren restlicher Daten zu den Codewörtern der betreffenden Datenblöcke;
- Decodierungsmitteln zum Decodieren der Datenblöcke zu Fernsehbildern;
dadurch gekennzeichnet, dass die Deformatierungsmittel dazu eingerichtet sind, die genannten Aufteilung eines Kanalblocks in Reaktion auf einen Statuscode (STA) durchzuführen, wobei dieser Code das Fehlen oder Vorhandensein restlicher Codewörter in dem Kanalblock angibt, wobei der genannte Statuscode an einer vorbestimmten Stelle jedes Kanalblocks untergebracht wird, und in Reaktion auf eine Startadresse (P) der genannten restlichen Codewörter in dem Kanalblock mit den genannten restlichen Codewörtern gefüllt wird, wobei die genannte Startadresse an einer vorbestimmten Stelle des Kanalblocks untergebracht ist, die bei Kanalblöcken ohne restliche Codewörter zum Unterbringen von Codewörtern benutzt wird.

8. Anordnung nach Anspruch 7, dadurch gekennzeichnet, dass sie dazu eingerichtet ist, Codewörter, die in vorbestimmten aufeinanderfolgenden Teilen eines Kanalblocks untergebracht sind entsprechenden Datenblöcken zuzuordnen, wobei die Länge jedes Blockteils Bezug auf einen Längencode, der in dem Kanalblock für diesen Zweck untergebracht ist, fest ist.

9. Videorecorder mit einer Anordnung nach einem der Ansprüche 1 bis 6 und eine Anordnung nach Anspruch 7 oder 8.

10. Digitales Videosignal, das digitale Fernsehbilder darstellt, die in Datenblöcke mit veränderliche-Längencodewörtern mit einer abnehmenden Reihenfolge von Signifikanz codiert sind, wobei wenigstens die signifikantesten Codewörter eines oder mehrerer Datenblöcke in einem entsprechenden Kanalblock fester Länge untergebracht ist, wobei restliche Codewörter der Datenblöcke, die nicht in den Kanalblock passen, in anderen Kanalblöcken untergebracht werden, und wobei ein Mangel an Daten in einem Kanalblock mit den restlichen Codewörtern anderer Datenblöcke gefüllt wird, dadurch gekennzeichnet, dass das Signal Folgendes umfasst: - einen Statuscode (STA), der das Fehlen oder Vorhandensein der genannten restlichen Codewörter in dem Kanalblock angibt, wobei der genannte Statuscode an einer vorbestimmten Stelle jedes Kanalblocks untergebracht ist, und - eine Startadresse (P) der genannten restlichen Codewörter in Kanalblöcken, die mit den genannten restlichen Codewörtern gefüllt ist, wobei die genannte Startadresse an einer vorbestimmten Stelle des Kanalblocks untergebracht ist, die in Kanalblöcken ohne restliche Codewörter zum Unterbringen von Codewörtern benutzt wird.

11. Videosignal nach Anspruch 10, wobei die Adresse in einer ganzen Anzahl fester Wortlängen ausgedrückt wird.

12. Videosignal nach Anspruch 11, wobei der Raum zwischen Daten entsprechender Datenblöcke und restlichen Daten mit dem Start eines veränderliche-Längencodewortes, das länger ist der genannte Raum, gefüllt wird.

13. Videosignal nach einem der Ansprüche 10 - 12, dadurch gekennzeichnet, dass selektierte Codewörter wenigstens zweier Datenblöcke in entsprechenden aufeinanderfolgenden Teilen eines Kanalblocks untergebracht sind, während ein Längencode, der indikativ ist für die Länge eines Kanalblockteils, an vorbestimmten Stellen des Kanalblocks für jeden Kanalblockteil untergebracht ist.

## Revendications

1. Dispositif (2) pour la transmission ou le stockage d'images de télévision numériques comprenant des moyens pour diviser chaque image de télévision en blocs de pixels, des moyens de codage (22-24) pour coder chaque bloc de pixels en un bloc de données (DB) de mots de code de longueur variable (V₁-Vₙ) dans un ordre décroissant de signification et des moyens de formatage (25) pour :
- arranger au moins les mots de code les plus significatifs (V₁-V₃) d'un ou plusieurs blocs de données (DB₁-DB₁₂) dans un bloc de canaux correspondant de longueur fixe;
- arranger le surplus de mots de code dans d'autres blocs de canaux si le bloc de canaux n'offre pas suffisamment de place pour tous les mots de code (V₁-V_{N}) du ou des blocs de données, et
- compléter ledit espace avec des mots de code en surplus d'autres blocs de données s'il reste de l'espace dans le bloc de canaux après tous les mots de code (V₁-V_{N}) du ou des blocs de données,
caractérisé en ce que les moyens de formatage (25) sont également propres à :
- recevoir un code d'état (STA) indiquant l'absence ou la présence dudit surplus de mots de code dans le bloc de canaux, ledit code d'état étant placé en une position prédéterminée de chaque bloc de canaux; et
- recevoir une adresse de début (P) dudit surplus de mots de code dans les blocs de canaux complétés avec lesdits mots de code en surplus, ladite adresse de début étant placée en une position prédéterminée du bloc de canaux qui, dans les blocs de canaux n'ayant pas de surplus de mots de code, est utilisée pour recevoir des mots de code.

2. Dispositif suivant la revendication 1, dans lequel l'adresse de début (P) est exprimée sous la forme d'un nombre entier de longueurs de mot fixes.

3. Dispositif suivant la revendication 2, qui est également propre à compléter l'espace entre les mots de code desdits bloc de données et mots de code en surplus d'autres blocs de données avec le début d'un mot de code de longueur variable qui est plus long que ledit espace.

4. Dispositif suivant l'une quelconque des revendications précédentes, caractérisé en ce que les moyens de formatage sont également propres à arranger les mots de code les plus significatifs d'au moins deux blocs de données dans des sections successives correspondantes d'un bloc de canal, tandis qu'un code de longueur qui est indicateur de la longueur d'une section de bloc de canaux est disposé en des positions prédéterminées du bloc de canaux pour chaque section de bloc de canaux.

5. Dispositif suivant la revendication 4, dans lequel les moyens de codage sont propres à classer les blocs de données en fonction du contenu en énergie d'image, le code de longueur étant formé par un code de classification (C) représentant ladite classification.

6. Dispositif suivant la revendication 5, dans lequel le code de longueur représente un nombre entier de longueurs de mot fixes.

7. Dispositif pour recevoir des images de télévision numériques sous la forme d'une série de blocs de canaux de longueur fixe, comprenant :
- des moyens de déformatage pour diviser les blocs de canaux en mots de code d'un ou plusieurs blocs de données correspondants et en données en surplus d'autres blocs de données et pour additionner les données en surplus aux mots de code des blocs de données respectifs, et
- des moyens de décodage pour décoder les blocs de données en images de télévision,
caractérisé en ce que les moyens de déformatage sont propres à effectuer ladite division d'un bloc de canaux en réponse à un code d'état (STA) indiquant l'absence ou la présence dudit surplus de mots de code dans le bloc de canaux, ledit code d'état étant placé en une position prédéterminée de chaque bloc de canaux, et, en réponse à une adresse de début (P) desdits mots de code en surplus dans les blocs de canaux complétés avec lesdits mots de code en surplus, ladite adresse de début étant placée en une position prédéterminée du bloc de canaux qui, dans les blocs de canaux n'ayant pas de surplus de mots de code, est utilisée pour recevoir des mots de code.

8. Dispositif suivant la revendication 7, caractérisé en ce qu'il est propre à attribuer des mots de code arrangés dans des parties successives prédéterminées d'un bloc de canaux à des blocs de données correspondants, la longueur de chaque section de bloc étant fixée en réponse à un code de longueur arrangé à cet effet dans le bloc de canaux.

9. Magnétoscope comprenant un dispositif suivant l'une quelconque des revendications 1 à 6 et un dispositif suivant la revendication 7 ou 8.

10. Signal vidéo numérique représentant des images de télévision numériques qui ont été codées en blocs de données de mots de code de longueur variable ayant un ordre décroissant de signification, au moins les mots de code les plus significatifs d'un ou plusieurs blocs de données étant arrangés dans un bloc de canaux correspondant de longueur fixe, un surplus des mots de code du ou des blocs de données ne trouvant pas place dans le bloc de canaux étant arrangé dans d'autres blocs de canaux, et un manque de données dans un bloc de canaux étant complété par les mots de code en surplus d'autres blocs de données, caractérisé en ce que le signal inclut :
- un code d'état (STA) indiquant l'absence ou la présence dudit surplus de mots de code dans le bloc de canaux, ledit code d'état étant placé en une position prédéterminée de chaque bloc de canaux; et
- une adresse de début (P) dudit surplus de mots de code dans les blocs de canaux complétés avec lesdits mots de code en surplus, ladite adresse de début étant placée en une position prédéterminée du bloc de canaux qui, dans les blocs de canaux n'ayant pas de surplus de mots de code, est utilisée pour recevoir des mots de code.

11. Signal vidéo suivant la revendication 10, dans lequel l'adresse est exprimée sous la forme d'un nombre entier de longueurs de mot fixes.

12. Signal vidéo suivant la revendication 11, dans lequel l'espace entre les données du ou des blocs de données correspondants et les données en surplus est complété avec le début d'un mot de code de longueur variable qui est plus long que ledit espace.

13. Signal vidéo suivant l'une quelconque des revendications 10 à 12, caractérisé en ce que des mots de code sélectionnés d'au moins deux blocs de données sont arrangés dans des sections successives correspondantes d'un bloc de canaux, tandis qu'un code de longueur qui est indicateur de la longueur d'une section de bloc de canaux est disposé en des positions prédéterminées du bloc de canaux pour chaque section de bloc de canaux.
